# EUROPÄISCHE PATENTANMELDUNG

(11) **EP 1 142 667 A2**
(43) Veröffentlichungstag der Anmeldung: **10.10.2001**
(21) Anmeldenummer: 01710014.0
(22) Anmeldetag: 29.03.2001
(51) Int. Cl.: B23Q 1/00, B23Q 9/00, B23Q 7/14

(54) **Bearbeitungseinheit zur zerspanenden Bearbeitung von auf einem Werkstückträger angeordneten metallischen Werkstücken**

(30) Priorität: 03.04.2000 DE 10016831
(71) Anmelder: ALZMETALL WERKZEUGMASCHINENFABRIK UND GIESSEREI FRIEDRICH GMBH & CO., 83352 Altenmarkt/Alz. (DE)
(72) Erfinder: Probst, Ludwig, 83278 Traunstein (DE)
(74) Vertreter: Pfenning, Meinig & Partner GbR

(57) **Zusammenfassung**

Die Erfindung betrifft eine Bearbeitungseinheit zur zerspanenden Bearbeitung von auf einem Werkstückträger angeordneten metallischen Werkstücken, die insbesondere zur Bearbeitung von Werkstücken mit hoher Präzision bezüglich der geforderten geometrischen Bearbeitungskonturen und der Güte der hergestellten Oberflächen, insbesondere bei großen Stückzahlen eingesetzt werden kann. Hierzu sind ein Antrieb für mindestens eine Arbeitsspindel und ein Vorschubantrieb in oder an einem Koppelgestell aufgenommen oder daran befestigt. Die Bearbeitungseinheit bildet ein separates Teil, das auf einen Werkstückträger zur Bearbeitung von Werkstücken mit einem Manipulator aufgesetzt werden kann. Am Koppelgestell sind mindestens drei Anzugs- und Spannelemente vorhanden, mit denen das Koppelgestell form- und kraftschlüssig auf dem Werkstückträger befestigt werden kann. Während der Bearbeitung besteht zwischen dem Manipulator und der Bearbeitungseinheit keine mechanische Verbindung, so dass eine Entkopplung gewährleistet ist.

## Beschreibung

Die Erfindung betrifft eine Bearbeitungseinheit zur zerspanenden Bearbeitung von auf einem Werkstückträger angeordneten metallischen Werkstücken, die insbesondere zur Bearbeitung von Werkstücken mit hoher Präzision bezüglich der geforderten geometrischen Bearbeitungskonturen und der Güte der hergestellten Oberflächen, bei großen Stückzahlen eingesetzt werden kann. Es können beispielsweise Werkstücke gebohrt, gerieben, Gewinde hergestellt, Senkungen in Bohrungen und andere herkömmliche Bearbeitungsformen durchgeführt werden.

Üblicherweise werden Bearbeitungszentren oder Bearbeitungseinheiten verwendet, bei denen eine Kraftrückkoppelung über ein offenes c-förmiges Gestell auftritt, da neben der Rotation von Werkzeugen auch deren Vorschub realisiert werden muß.

Durch die Kraftrückkopplung über ein solches Gestell treten infolge von Biegung und Torsion an Gestellbauteilen geometrische Abweichungen auf, die über die Werkzeuge zu entsprechenden Geometriefehlern an den Werkstücken führen.

Dieser Einfluß wird zusätzlich durch wirkungsgradbedingten Eintrag von Wärmeenergie z.B. an den Lagerungen, Zahneingriffen, an Aktuatoren, u.a. mehr, die ebenfalls in die Gestellbauteile eingeleitet werden, verstärkt.

Es ist daher Aufgabe der Erfindung, bei Vermeidung von Kraftrückkopplungen über ein Maschinengestell, die Fertigungsgenauigkeit bei der zerspanenden Bearbeitung von Werkstücken zu erhöhen.

Erfindungsgemäß wird diese Aufgabe mit einer Bearbeitungseinheit nach Anspruch 1 gelöst. Vorteilhafte Ausgestaltungsformen und Weiterbildungen der Erfindung ergeben sich mit den in den untergeordneten Ansprüchen genannten Merkmalen.

Die erfindungsgemäße Bearbeitungseinheit zur zerspanenden Bearbeitung von auf einem Werkstückträger angeordneten Werkstücken verfügt über die üblichen Elemente, nämlich einem Antrieb für mindestens eine in einer Spindel eines Vorschubantriebes geführten Arbeitsspindel, wobei der Antrieb in unterschiedlicher Form ausgeführt sein kann.

Sowohl der Antrieb für die Arbeitsspindel bzw. auch mehrerer Arbeitsspindeln und auch der Vorschubantrieb für die Arbeitsspindeln sind in einem gemeinsamen Koppelgestell aufgenommen oder unmittelbar daran befestigt. Das Koppelgestell übernimmt dabei im Wesentlichen Gehäusefunktion. Die so ausgebildete Bearbeitungseinheit ist ein separates Teil, das zur Bearbeitung von Werkstücken mit Hilfe eines Manipulators auf den Werkstückträger aufgesetzt werden kann. Nach dem Aufsetzen der Bearbeitungseinheit wird während der zerspanenden Bearbeitung die mechanische Verbindung zum Manipulator aufgehoben, so dass keine Kraftrückkopplungen auftreten können.

An der Bearbeitungseinheit sind mindestens drei Anzugs- und Spannelemente vorhanden, die form- und kraftschlüssig auf dem Werkstückträger befestigbar sind. Mit dieser Befestigung kann die Bearbeitungseinheit mit sehr hoher Genauigkeit positioniert und während der Bearbeitung auftretende Momente und Kräfte wirken sich nicht auf die Fertigungsgenauigkeit aus, da die Befestigung sowohl radial wie auch axial mit hoher Wiederholgenauigkeit erfolgt und eine hohe Stabilität gewährleistet ist. Durch die so erreichte Koppelung des statischen Teiles, des in Vorschubrichtung wirkenden Führungssystems der Bearbeitungseinheit mit dem Werkstückträger, als Werkstückaufspannvorrichtung können Bearbeitungsfehler weitestgehend vermieden werden und es wird sowohl eine geometrisch symmetrische und thermisch symmetrische Anordnung des Hauptantriebes erreicht.

Die erfindungsgemäß zu verwendenden Anzugs- und Spannelemente sind vorteilhaft symmetrisch und/oder mit jeweils gleichen Abständen von der Mittelachse der Bearbeitungseinheit angeordnet und zwischen den Anzugs- und Spannelementen werden jeweils gleiche Winkelabstände eingehalten. Die Anzugs- und Spannelemente sind an der in Richtung auf den Werkstückträger weisenden Stirnfläche am Koppelelement angeordnet, so dass die Bearbeitungseinheit auf den Werkstückträger durch eine entsprechende einachsige Bewegung sicher aufgesetzt und im Anschluss mit dem Werkstückträger mechanisch verbunden werden kann.

Am Werkstückträger sind zumindest teilweise komplementär zu den Anzugs- und Spannelementen konturierte Aufsätze angeordnet und entsprechend positioniert, so dass durch die geometrische Gestaltung der Aufsätze und der Anzugs- und Spannelemente beim Aufsetzen der Bearbeitungseinheit eine sehr hohe Positionsgenauigkeit erreicht werden kann. Hierzu sind die Anzugs- und Spannelemente zumindest bereichsweise und demzufolge auch die Aufsätze am Werkzeugträger ebenfalls zumindest bereichsweise konisch ausgebildet.

Vorteilhaft ist es, die Anzugs- und Spannelemente in Hohlschaftkegelform auszubilden, wobei auf standardisierte Maße und/oder Elemente zurückgegriffen werden kann.

Nach dem Aufsetzen der Bearbeitungseinheit und dem Lösen der Verbindung zum Manipulator können die Anzugs- und Spannelemente in radialer und axialer Richtung vorgespannt werden, so dass Geometriefehler während der zerspanenden Bearbeitung verhindert werden können.

Für die Vorspannung der Anzugs- und Spannelemente können auch bei der Verwendung von Hohlschaftkegelformen verschiedene Möglichkeiten zur Anwendung kommen. So kann ein herkömmliches System mit einem in axialer Richtung wirkenden Tellerfederpaket, das gravitationskraftbedingt beim Aufsetzen der Bearbeitungseinheit auf den Werkstückträger selbstätig vorgespannt werden kann, eingesetzt werden. Das Lösen kann dann pneumatisch bzw. hydraulisch durch Einleiten eines komprimierten Fluids in einen zylinderförmig ausgebildeten Raum erreicht werden und der Fluiddruck über einen Kolben gegen das vorgespannte Tellerfederpaket wirken, so dass die radial und axiale Spannung wieder aufgehoben wird. Selbstverständlich kann die entsprechende Gegenkraft auch auf mechanischen Wege aufgebracht werden.

Als Manipulator zum Aufsetzen und Abheben der Bearbeitungseinheit auf den vorab mit mindestens einem Werkstück bestückten Werkstückträger kann mindestens ein vertikales Hubsystem, auf das bei der Beschreibung von Ausführungsbeispielen noch zurückzukommen sein wird, aber auch ein Industrieroboter eingesetzt werden. Insbesondere der letztgenannte Industrieroboter kann vorteilhaft für die Fertigungsflexibilität sein, in dem mehrere unterschiedlich ausgebildete Bearbeitungseinheiten magazinisiert vorgehalten und durch eine entsprechend programmierte Steuerung des Industrieroboters die jeweilige geeignete Bearbeitungseinheit für die Bearbeitung unterschiedlicher Werkstücke auf den entsprechend bestückten Werkstückträger aufgesetzt werden kann.

Bei großen Serien, die hintereinander bearbeitet werden sollen, genügt ein vertikales Hubsystem, mit dem kürzere Taktzeiten für den Werkstückwechsel erreicht werden können.

Die Taktzeit kann außerdem erhöht werden, indem Werkstückträger, die auf einem Rundschalttisch angeordnet sind, verwendet werden.

Nachfolgend soll die Erfindung beispielhaft beschrieben werden.

Dabei zeigen:
- Figur 1: ein Beispiel einer erfindungsgemäßen, auf einem Werkstückträger aufgesetzten Bearbeitungseinheit und
- Figur 2: die Bearbeitungseinheit nach Figur 1 in mittels eines Hubsystems angehobener Position.

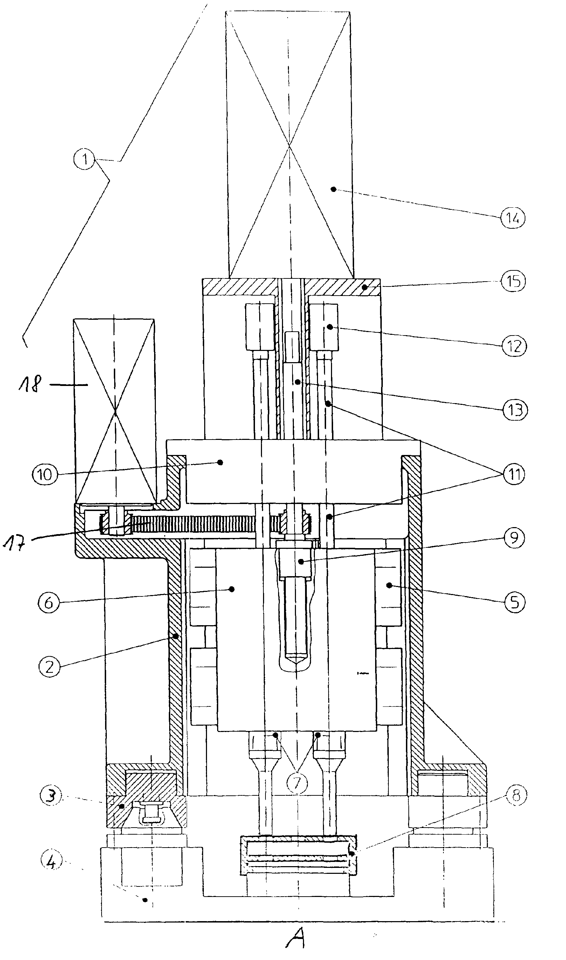

Das in der Figur 1 gezeigte Beispiel einer erfindungsgemäßen Bearbeitungseinheit besteht aus unterschiedlichen Elementen, die in einem Koppelgestell 2 angeordnet, geführt und/oder an diesem befestigt sind.

So ist die Antriebswelle eines Antriebsmotors 14 für den Antrieb von Werkzeuge tragenden Arbeitsspindeln 7 in der Mittelachse A der Bearbeitungseinheit 1 angeordnet und entsprechend ausgerichtet. Sie greift in die Antriebswelle 13 eines Sonnenrades, eines Räderumlaufgetriebes 10 ein.

Der Antriebsmotor 14 ist über einen Zwischenflansch 15 starr mit dem Koppelgestell 2 verbunden, in dem auch das Räderumlaufgetriebe 10 befestigt ist.

Mit den hier nicht erkennbaren Planetenrädern können mindestens zwei Antriebswellen 11 für die entsprechende Anzahl von Antriebsspindeln 7 angetrieben werden.

An der in Richtung auf den Werkstückträger 4 weisenden Stirnflächen des Koppelgestells 2 sind bei diesem Beispiel drei Anzugs- und Spannelemente 3 vorhanden, mit deren Hilfe eine radial und axial mit hoher Wiederholgenauikgeit kraft- und formschlüssige Verbindung mit dem Werkstückträger 4 erreicht werden kann.

Im Inneren des Koppelgestells 2 ist ein Führungssystem 5 für die Vorschubbewegung eines Spindelträgers 6 zur Bearbeitung eines Werkstückes 8, bei diesem Beispiel in Form von drei symmetrisch zueinander angeordneten Linearwalzführungen ausgebildet.

Entsprechend der technologischen und geometrischen Anforderungen für die Bearbeitung des Werkstückes 8 sind die Arbeitsspindel 7 im Spindelträger 6 angeordnet und drehbar gelagert.

Die Antriebswelle 9 des Vorschubantriebes ist geometrisch zentrisch, also ebenfalls in der Mittelachse A der Bearbeitungseinheit 1 angeordnet und der Vorschubantrieb erfolgt über einen Zahnriemen 17, der von einem gesonderten Vorschubantriebsmotor 18 angetrieben wird, wobei die Drehbewegung vorteilhaft über ein Kugelumlaufgetriebe auf die Antriebswelle 9 übertragen werden kann. Durch die geometrisch zentrische Anordnung der Antriebswelle 9, auch in Bezug zu den Arbeitsspindeln 7 können vorschubkraftbedingte Kippmomente auf den Spindelträger 6 und das Führungssystem 5 vermieden werden.

Auch mit dem geometrisch- und thermisch symmetrischen Getriebe 10, wie dies ein Räderumlaufgetriebe ist, das mit dem Koppelgestell 2 starr verbunden ist, können Drehmoment und Drehzahl auf die Arbeitsspindeln 7, deren Antriebswellen zumindest teilweise mit einem Keilwellenprofil ausgestattet sind, auch während der Vorschubbewegung in der gewünschten Form übertragen werden.

Zwischen dem Antriebsmotor 14 und Räderumlaufgetriebe 10 kann eine Kupplung angeordnet sein.

An den hier oberen Enden der Antriebswellen 11 für die Arbeitsspindeln 7 sind an sich bekannte Drehdurchführungen 12 für die Übertragung von Kühlschmierstoffen und/oder Luft durch das Werkzeug vorhanden, wobei der Volumenstrom und eine entsprechende Auswahl von Kühlschmierstoff bzw. Luft entsprechend den jeweils technologischen Anforderungen für die jeweilige Bearbeitung beeinflusst bzw. getroffen werden kann.

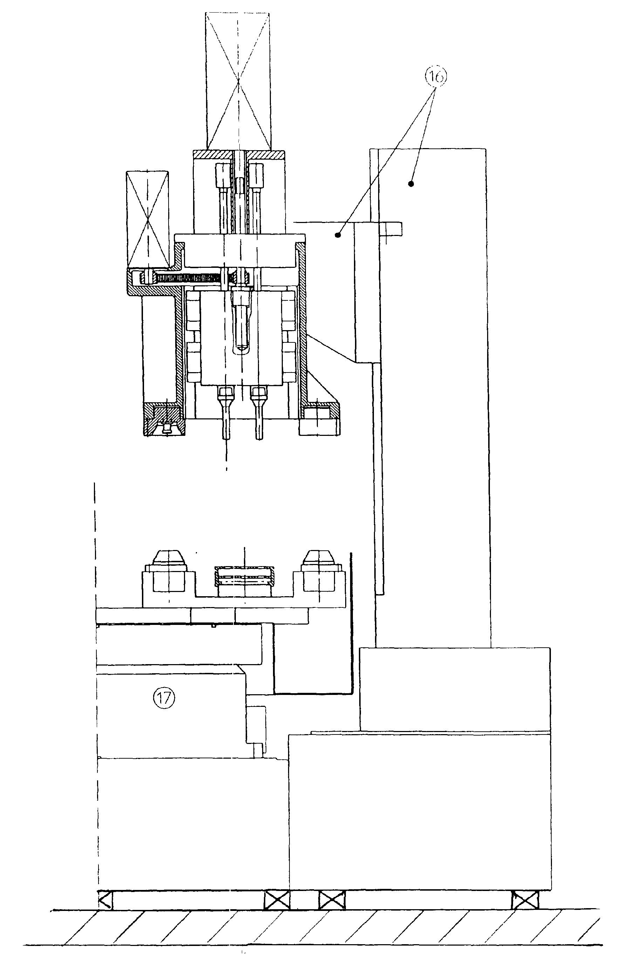

Entsprechend der Anzahl von Bearbeitungsvorgängen bei einachsigen Rundtaktmaschinen können mehrere solcher Bearbeitungseinheiten 1 jeweils an Hubsystemen 16, wie sie in Figur 2 gezeigt sind, verwendet werden und bei jedem Arbeitstakt können verschiedene Bearbeitungseinheiten 1 nach dem Lösen der Anzugs- und Spannelemente 3, deren Anheben und nach Teilen eines Rundschalttisches 17 wieder auf den Werkstückträgern 4 abgesetzt und form- und kraftschlüssig befestigt werden.

In der Figur 2 ist eine mittels des hier einen Hubsystems 16 angehobene Bearbeitungseinheit 1 gezeigt. Nach dem Absetzen der Bearbeitungseinheit 1 besteht kein Form- und Kraftschluss zwischen der Bearbeitungseinheit 1 und dem Hubsystem 16, wobei hierfür günstigerweise eine keilförmige Aufnahme an der Bearbeitungseinheit 1 und eine entsprechende ausgebildete Form am Hubsystem 16 vorhanden sind und dementsprechend die mechanische Verbindung zwischen Bearbeitungseinheit 1 und Hubsystem 16, bei Bewegung des vertikal bewegbaren Teils des Hubsystems 16 in Richtung auf den Werkstückträger 4 über ein bestimmtes Maß hinaus, bei dem die Bearbeitungseinheit 1 auf dem Werkstückträger 4 aufgesetzt ist, hinaus, einfach ohne zusätzlichen Aufwand die mechanische Trennung erfolgen kann.

Bei einem Rundtaktprozess können die jeweils beteiligten Bearbeitungseinheiten 1 auf einem gemeinsamen Träger, der von wenigstens zwei solcher Hubsysteme 16 auf mehrere Werkstückträger 4 abgesenkt oder angehoben werden, wobei die Bearbeitungseinheiten 1 entsprechend angeordnet sind.

## Patentansprüche

1. Bearbeitungseinheit zur zerspanenden Bearbeitung von auf einem Werkstückträger angeordneten metallischen Werkstücken, mit einem Antrieb für mindestens eine in einer Spindel eines Vorschubantriebes geführten Arbeitsspindel,
**dadurch gekennzeichnet, dass** der Antrieb (7, 10, 14) für die Arbeitsspindel(n) (7) und der Vorschubantrieb (6, 9, 17, 18) in oder an einem Koppelgestell (2) aufgenommen oder daran befestigt sind,
die Bearbeitungseinheit (1), als separates Teil auf den Werkstückträger (4) zur Bearbeitung von Werkstücken (8) mit einem Manipulator (16) aufsetzbar und
mit mindestens drei Anzugs- und Spannelementen (3) form- und kraftschlüssig auf dem Werkstückträger (4) befestigbar ist.

2. Bearbeitungseinheit nach Anspruch 1,
**dadurch gekennzeichnet, dass** die Anzugs- und Spannelemente (3) symmetrisch und/oder mit jeweils gleichen Abständen von der Mittelachse (A) der Bearbeitungseinheit (1), und in jeweils gleichen Winkelabständen voneinander am Koppelelement (2) angeordnet sind.

3. Bearbeitungseinheit nach Anspruch 1 oder 2,
**dadurch gekennzeichnet, dass** am Werkstückträger (4) zumindest teilweise komplementär zu den Anzugs- und Spannelementen (3) konturierte Aufsätze (18) angeordnet sind.

4. Bearbeitungseinheit nach einem der Ansprüche 1 bis 3, **dadurch gekennzeichnet, dass** die Anzugs- und Spannelemente (3) zumindest bereichsweise konisch ausgebildet sind.

5. Bearbeitungseinheit nach einem der Ansprüche 1 bis 4, **dadurch gekennzeichnet, dass** die Anzugs- und Spannelemente (3) in Hohlschaftkegelform ausgebildet sind.

6. Bearbeitungseinheit nach einem der Ansprüche 1 bis 5, **dadurch gekennzeichnet, dass** die Anzugs- und Spannelemente (3) in radialer und axialer Richtung vorspannbar sind.

7. Bearbeitungseinheit nach einem der Ansprüche 1 bis 6, **dadurch gekennzeichnet, dass** der Manipulator mindestens ein vertikales Hubsystem (16) oder ein Industrieroboter ist.

8. Bearbeitungseinheit nach einem der Ansprüche 1 bis 7, **dadurch gekennzeichnet, dass** der Antrieb von mehreren Arbeitsspindeln (7) über ein Räderumlaufgetriebe (10) erfolgt.

9. Bearbeitungseinheit nach einem der Ansprüche 1 bis 8, **dadurch gekennzeichnet, dass** die Antriebswelle (9) des Vorschubantriebes geometrisch zentrisch in Bezug zu den Arbeitsspindeln (7) angeordnet ist.

10. Bearbeitungseinheit nach einem der Ansprüche 1 bis 9, **dadurch gekennzeichnet, dass** mindestens zwei Werkstückträger (4) auf einem Rundschalttisch (17) angeordnet sind.

11. Bearbeitungseinheit nach einem der Ansprüche 1 bis 10, **dadurch gekennzeichnet, dass** an der/den Antriebswelle(n) (11) der Arbeitsspindel(n) (7) Drehdurchführungen für Kühlschmierstoff und/oder Luft vorhanden sind.
